(19) Europäisches Patentamt
European Patent Office
Office européen des brevets

(11) Veröffentlichungsnummer: **0 306 794 B1**

(12) **EUROPÄISCHE PATENTSCHRIFT**

(45) Veröffentlichungstag der Patentschrift: **23.12.92**

(51) Int. Cl.$^5$: **C09J 177/10**, C08G 69/26

(21) Anmeldenummer: **88114068.5**

(22) Anmeldetag: **29.08.88**

(54) **Copolyamid Klebemassen.**

(30) Priorität: **09.09.87 CH 472/87**

(43) Veröffentlichungstag der Anmeldung:
**15.03.89 Patentblatt 89/11**

(45) Bekanntmachung des Hinweises auf die Patenterteilung:
**23.12.92 Patentblatt 92/52**

(84) Benannte Vertragsstaaten:
**AT CH DE ES FR GB IT LI NL**

(56) Entgegenhaltungen:
**DE-A- 2 263 922**
**DE-A- 2 729 502**
**FR-A- 2 212 359**
**FR-A- 2 239 491**
**GB-A- 799 762**

(73) Patentinhaber: **EMS-INVENTA AG**
**CH-8001 Zürich(CH)**

(72) Erfinder: **Hewel, Manfred, Dr.**
**Sculmserstrasse 12**
**CH-7402 Bonaduz(CH)**
Erfinder: **Lavalette, Annette**
**Reichsstrasse 12**
**CH-7000 Chur(CH)**
Erfinder: **Annighöfer, Frank, Dr.**
**Haus Palidetta**
**CH-7412 Scharans(CH)**

(74) Vertreter: **Müller-Boré & Partner Patentanwälte**
**Isartorplatz 6 Postfach 26 02 47**
**W-8000 München 2(DE)**

EP 0 306 794 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft den in den Patentansprüchen angegebenen Gegenstand. Die Erfindung betrifft insbesondere Copolyamidklebemassen, deren Verarbeitbarkeit und/oder Verklebbarkeit durch Einwirkung von Feuchtigkeit oder Wasser starkt verbessert bzw. ermöglicht wird und deren Wärmefestigkeiten nach der Verarbeitung weit über der zur Verarbeitung angewendeten Temperatur, nämlich im Bereich der sogenannten Hochleistungsschmelzkleber, liegen.

Es ist bekannt, daß sich Caprolactam, Laurinlactam, Hexamethylendiaminadipinat und andere aliphatische Polyamid-bildner für Klebemassen eignen, wenn die Monomerzusammensetzung so gewählt wird, daß der Schmelzpunkt des Copolyamids bei etwa 70 - 150 ° C liegt. Copolyamide dieser Art, wie sie in den DE 12 53 449, DE 22 63 922, DE 23 24 159, DE 23 24 160, DE 32 48 776, US 39 33 762, CH 491 150, CH 482 756 und CH 540 311 beschrieben werden, weisen z.B. als Klebemassen eine gute Wasch- und Reinigungsbeständigkeit auf.

In den DE-27 29 502, FR-2 212 359, DE-22 63 922, FR-2 239 491, CH-540 311, FR-2 228 813 und FR-1 574 742 sind jedoch nur Copolyamide aus aliphatischen Monomerbausteinen beschrieben.

Aus der GB-799 762 sind Copolyamide bekannt, bei denen eine polyamidbildende Komponente aus aromatischen Diaminen besteht, die am Phenylrest 5 oder 6 Substituenten enthalten. Die resultierenden Polyamide/Copolyamide zeigen außerordentlich hohe, weit über 220 ° C (250-300 ° C) liegende Schmelzbzw. Erweichungspunkte (Beispiele II bis XII). Diese Polyamide/Copolyamide sollen zur Faserherstellung eingesetzt werden.

Die JP 79 023 397 beschreibt Copolyamide aus Caprolactam, Laurinlactam und m-Xylylendiaminadipinat, die eine besonders gute Reinigungsbeständigkeit aufweisen.

Gemäß der JP 74 019 093 ist eine gute Wasch- und Reinigungsbeständigkeit auch bei Copolyamiden aus Caprolactam und Salzen aus m-Xylylendiamin und Dodecandisäure gegeben. Copolyamide aus Xylylendiamin und Dimerfettsäuren eignen sich ebenfalls als Klebemassen. (NL 17 45 63, NL 75 08 420, JP 81 029 687, CA 887 138).

Alle diese Copolyamide sind von hoher Beständigkeit gegen Lösungsmittel in der chemischen Reinigung und Wasser in der Wäsche. Die Haftwerte und Wärmestandfestigkeiten solcher Polyamid-Schmelzklebemassen liegen im Vergleich zu anderen Schmelzklebemassen, wie z.B. Ethylen/Vinylacetat-Copolymeren oder Styrol/Butadien-Blockcopolymeren, sehr hoch. Sie werden daher als Hochleistungsschmelzkleber bezeichnet (F. Eichhorn und Th. Reiner, Elektro-Anzeiger 34/7, 33 (1981)).

Der Nachteil der beschriebenen Copolyamid-Schmelzklebemassen ist, daß die zur Verarbeitung notwendige hohe Temperatur grundsätzlich höher liegt als die Erweichungstemperatur der Copolyamide selber. Die Wärmestandfestigkeit der Verklebung entspricht der Erweichungstemperatur der Copolyamide und liegt damit tiefer als die zur Verarbeitung notwendige Temperatur.

Tiefe Verarbeitungstemperaturen weisen solche Polymerzusammensetzungen auf, die Additive mit weichmachenden oder klebrigmachenden Wirkungen enthalten (US 37 92 002, US 34 49 273, US 37 87 342). Für Verklebungen ist die Wärmestandfestigkeit solcher Polymerzusammensetzungen jedoch schlechter als für Polyamidklebemassen ohne die genannten Zusätze. Außerdem liegen auch die erreichbaren Haftwerte tiefer als für Copolyamid-Klebemassen ohne Additive.

Es ist somit Aufgabe der Erfindung, Klebemassen auf Basis von Copolyamiden mit hohen Haftwerten und hohen Wäremstandfestigkeiten zu schaffen, die bei niedrigen Temperaturen, möglichst bei Raumtemperatur, verarbeitet werden können, ohne daß umweltbelastende Lösungsmittel oder klebrigmachene Additive beigemischt werden.

Diese Aufgabe wird durch die kennzeichnenden Merkmale des Anspruchs 1 bzw. 12 gelöst.

Die erfindungsgemäßen bei Temperaturen unter 60 ° C verarbeitbaren Klebemassen auf der Basis von mindestens zwei polyamidbildenden Komponenten sind dadurch charakterisiert, daß sie einen DSC-Schmelzpunkt von mindestens 100 ° C, eine Glasübergangstemperatur, gemessen durch DSC am trockenen Pulver, von höchstens 60 ° C, in trockenem Zustand eine Erweichungstemperatur von mindestens 100 ° C sowie nach Befeuchten unter Gewichtszunahme eine Erweichungstemperatur unter 100 ° C besitzen und nach Verarbeiten in feuchtem bzw. befeuchteten Zustand Wärmestandfestigkeiten im Verbund wie Hochleistungsschmelzkleber von mindestens 110 ° C haben, wobei die erfindungsgemäßen Massen insbesondere nach Befeuchten bei Raumtemperaturen verarbeitet werden können.

Die Erfindung beruht demgemäß auf der Feststellung, daß spezielle Copolyamide, im feuchten Zustand eingesetzt, eine Verarbeitung weit unter ihrem Erweichungspunkt erlauben. Ihre Wärmestandfestigkeit ist aber trotzdem durch den Erweichungspunkt gegeben. Die erreichbaren Haftwerte entsprechend denen der weiter oben beschriebenen sogenannten Hochleistungsschmelzklebern. Gegenüber Hochleistungsschmelzklebern gemäß dem Stand der Technik besitzen die Copolyamid der Erfindung damit den eindeutigen und

ganz besonderen Vorteil, daß die zur Verarbeitung nötige Temperatur weit unter der resultierenden Wärmestandfestigkeit liegt. Gegenüber den herkömmlichen klebrigmachenden Schmelzklebern besitzen sie den Vorteil, daß keine physikalisch eingemischten, niedrigmolekularen Bestandteile herauswandern können, die die Umwelt belasten. Der wesentliche Vorteil jedoch ist, daß die erreichten Wärmestandfestigkeiten und Haftwerte erheblich höher liegen als die mit klebrigmachenden Klebern erreichbaren.

Die vorteilhaften Eigenschaften der in den erfindungsgemäßen Klebemassen eingesetzten Copolyamide lassen sich in mannigfaltiger Weise beim Verarbeiten nutzen, weil die dazu erforderlichen Temperaturen in bisher nicht bekannter Weise tief gehalten werden können. So lassen sich dadurch die Verarbeitungsschritte, insbesondere des Klebens, energiesparend und produktschonend durchführen.

Als erfindungsgemäße Klebemassen eignen sich Copolyamide,

a) die DSC-Schmelzpunkte von mindestens 100 °C, insbesondere zwischen 120 und 185 °C haben, wobei die DSC-Schmelzpunkte an trockenen Pulvern mit einer Aufheizrate von 20 °C/min gemessen werden,

b) deren Glasübergangstemperaturen unter 60 °C, insbesondere zwischen 25 und 60 °C liegen, wobei die Glasübergangstemperatur an trockenen Pulvern gemessen wird, indem die Pulver zunächst über ihre Schmelzpunkte aufgeheizt und anschließend mit Trockeneis abgeschreckt werden, wobei sich beim zweiten Aufheizen die Glasübergangstemperaturen als die Temperaturen, bei denen sich die Steigungen der DSC-Kurven ändern, ergeben,

c) deren Erweichungstemperaturen, gemessen mit der Kofler-Bank an trockenen Pulvern, über 100 °C, insbesondere zwischen 110 und 160 °C, liegen,

d) die bei Lagerung in Wasser mit einer Temperatur von 23 °C während einer Zeitspanne von 16 Stunden einen Wassergehalt (bestimmt durch Karl-Fischer-Titration) von mehr als 20 Gew.-%, insbesondere von mehr als 25 Gew.-%, annehmen,

e) deren Erweichungstemperaturen, gemessen mit der Kofler-Bank an feuchten Pulvern, d.h. solchen mit mehr als 20 Gew.-%, insbesondere mehr als 25 Gew.-% Wassergehalt, unter 100 ° C, insbesondere zwischen 45 und 100 °C, liegen,

f) die im feuchten Zustand, unter 60 °C, insbesondere unter 30 °C, verarbeitet, Verbunde ergeben, die Wärmestandfestigkeiten über 110 °C, insbesondere zwischen 130 und 180 °C und ganz besonders zwischen 140 und 160 °C haben.

Copolyamide der erfindungsgemäßen Art werden vorzugsweise erhalten, wenn eine wesentliche polyamidbildenede Komponente aus einem Salz oder Gemisch mindestens eines Diamins mit 6 bis 22 C-Atomen der Formel:

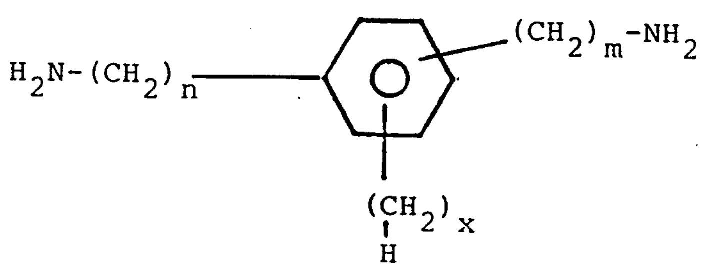

mit
n = 0 bis 6
m = 0 bis 6
x = 0 bis 4
und mindestens einer aliphatischen Dicarbonsäure mit 6 bis 12 Kohlenstoffatomen und/oder aus einem Salz oder Gemisch mindestens eines aliphatischen Diamins mit 6 bis 12 Kohlenstoffatomen und mindestens einer aromatischen Dicarbonsäure mit 8 bis 10 Kohlenstoffatomen, besteht.

Bevorzugte Monomere dieser polyamidbildenden Komponente sind Diamine mit n = 1 oder 2, m = 1 oder 2, x = 0 und Adipinsäure, Azelainsäure, Sebazinsäure oder Dodecandisäure und/oder Hexamethylendiamin und Terephthalsäure, Isophthalsäure oder Toluoldicarbonsäure. Ganz besonders geeignet sind Copolyamide, die 15 bis 55 Gew.-%, bezogen auf die Gesamtklebemasse, eines Salzes oder Gemisches aus m-Xylylendiamin und Adipinsäure, und/oder aus Hexamethylendiamin und Isophthalsäure enthalten.

Die restlichen 45 bis 85 Gew.-% der Klebemassen bestehen aus den üblichen aliphatischen polyamidbildenden Komponenten. Diese können Lactame und/oder ω-Aminocarbonsäuren mit 6 bis 12 C-Atomen und Salze oder Gemische aus aliphatischen Diaminen mit 4 bis 12 C-Atomen, besonders mit 6 bis 12 C-Atomen, und alipahtischen Dicarbonsäuren mit 4 bis 12, insbesondere mit 6 bis 12 C-Atomen, oder Gemische dieser polyamidbildenden Komponenten sein.

Besonders geeignete Klebemassen werden hergestellt aus 1 bis 50 Gew.-%, besonders 1 bis 40 Gew.-%, bezogen auf die gesamte Klebemasse, eines Salzes oder Gemisches aus Hexamethylendiamin und Adipinsäure und 25 bis 75 Gew.-%, besonders 30 bis 60 Gew.-% Caprolactam und/oder ω-Aminocapronsäure. Die erfindungsgemäßen Klebemassen werden vorteilhaft zu Granulaten, Pulver, Folien oder anderen gebräuchlichen Formen konfektioniert.

Für den Anwendungsfall einer Verklebung mit der erfindungsgemäßen Klebemasse aus Copolyamiden wird die Polymermasse, wie für Schmelzkleber üblich, als Pulver, Folie oder Schmelze auf eines oder beide der zu verklebenden Substrate aufgetragen. Bevor die Verklebung erfolgt, wird das Polymere mit Wasser oder Wasserdampf befeuchtet. Anschließend werden die beiden zu verklebenden Substrate zusammengefügt. Das Zusammenfügen erfolgt bei einer Temperatur, die deutlich unterhalb der Erweichungstempertur der ursprünglichen, trockenen Polyamid-Klebemasse liegt.

Vorzugsweise wird das Zusammenfügen bei einer Temperatur von weniger als 60 °C, bevorzugt unter 30 °C, und insbesondere bei Raumtemperatur, durchgeführt. Nach dem Trocknen der verklebten Teile hat die Verklebung eine Wärmestandfestigkeit, die wesentlich höher liegt als die zur Verklebung angewendete Temperatur. Bei erneutem Befeuchten, z.B. wie vor dem Verarbeiten, läßt sich der frühere, zur Verarbeitung, z.B. zum Verkleben, eingestellte Zustand nicht mehr erreichen, d.h. die Klebemasse bleibt hart und ihre Wärmestandfestigkeit bleibt in einem Bereich, der wesentlich über der zum Verarbeiten angewendeten Temperatur, bevorzugt in der Nähe des Erweichungspunktes der ursprünglichen trockenen Klebemasse, liegt. Die Klebefestigkeit liegt in einer Größenordnung, wie sie für Hochleistungsschmelzkleber auf der Basis von Copolyamid üblich ist.

Der feste Zustand der Klebemassen wird erst am Erweichungspunkt bzw. durch erneutes Schmelzen rückgängig gemacht. Danach ist es möglich, mit Feuchtigkeit erneut eine Verarbeitung einzuleiten.
Die folgenden Beispiele verdeutlichen den Einsatz und die Eigenschaften der erfindungemäßen Klebemassen. Zur Abgrenzung des beanspruchten Bereiches der Zusammensetzung der erfindungsgemäßen Klebemassen dienen die Vergleichsbeispiele 7 und 8. Zur Abgrenzung von bekannten Copolyamidklebern dient das Vergleichsbeispiel 9. Zur Abgrenzung von durch Additive klebriggemachten Polyamidklebern dienen die Vergleichsbeispiele 10 und 11.

Copolyamidherstellung

Beispiel 1 bis 6 und Vergleichsbeispiele 7 bis 9

Caprolactam, Hexamethylendiaminadipinat (AH-Salz) und m-Xylendiaminadipinat (MXDA.6-Salz), Hexamethylendiaminisophthalat (6.IPS-Salz) bzw. ω-Aminolaurinsäure werden in ein Reaktionsgefäß aus Edelstahl eingewogen. Nach Verschließen des Gefäßes wird mit Stickstoff gespült. Das Reaktionsgefäß wird in einen auf 180 °C aufgeheizten Metallblock eingesetzt. Nach 15 min. Aufschmelzzeit wird die Monomerschmelze gerührt. Nach einer Stunde wird unter Rühren auf 250 °C aufgeheizt. Nach fünf weiteren Stunden Reaktionszeit wird das Reaktionsgefäß entleert. Das Copolyamid wird anschließend 2 Stunden bei 70 °C getempert.

Zusammensetzung der Klebemassen (Tabelle 1)

Eigenschaften der Klebemassen (Tabelle 2)

Vergleichsbeispiel 10

50 Gewichtsteile des Copolyamids aus Beispiel 9 werden, wie in der US 37 87 342 beschrieben, mit 5 Gewichtsteilen eines Glycerinesters von fumarsäuremodifiziertem Rosinharz und 2,5 Gewichtsteilen Paraffin von Schmelzpunkt 55 °C formuliert.

Vergleichsbeispiel 11

Wie in der US 34 49 273 beschrieben, wird ein Copolyamidkleber aus 90 Gew.-% des Copolyamides aus Beispiel 9 mit 10 Gew.-% Naphtol gemischt.

Verklebung mit Pulver (Tabelle 3)

Die Copolyamide werden mittels einer Stiftmühle bei -80 °C gemahlen. Aus dem Rohmahlgut wird im Streuauftrag ein Polyester-Nadelvlies mit einem Quadratmetergewicht von 200 g derart beschichtet, daß die Kleberauflage 50 $g/m^2$ beträgt. Das Pulver wird unter einem Infrarotstrahler bei möglichst milden Bedingungen angesintert. Anschließend wird das beschichtete Nadelvlies, wenn in der folgenden Tabelle "feucht" vermerkt ist, auf der mit Klebemasse beschichteten Seite mit Wasser besprüht. Darauf wird das Vlies in einer Flachpresse mit einem Druck von 2 $kp/cm^2$ mit Tritex-Phenolharzpressplatten verklebt. Gemessen wird anschließend die Schälhaftung nach DIN 54 310 und die Wärmestandfestigkeit. Zur Messung der Wärmestandfestigkeit werden Probekörper von 2 x 8 cm mit 0,4 N/2 cm schälbelastet und mit 1 °C/min. aufgeheizt. Als Wärmestandfestigkeit gilt die Temperatur, bei der die Schälhaftung 0,4 N/2 cm unterschreitet.

Verklebungen mit Folie (Tabelle 4)

Aus den Schmelzklebern werden durch Pressen bei erhöhter Temperatur Folien von 50 µm Dicke hergestellt. Diese Klebefolien werden zum Verkleben von Polyester-Nadelvlies mit Tritex-Phenolharzpressplatten verwendet. Die Durchführung von Verklebung und Prüfung erfolgt wie beim Pulver.

Tabelle 1

| Zusammensetzungen | | | | | |
|---|---|---|---|---|---|
| Beispiel | Caprolactam Gew.-% | AH-Salz Gew.-% | MXDA.6-Salz Gew.-% | 6.IPS-Salz Gew.-% | ω-Aminolaurinsäure Gew.-% |
| 1 | 40 | 20 | 40 | | |
| 2 | 33 | 28 | 39 | | |
| 3 | 55 | 15 | 30 | | |
| 4 | 25 | 25 | 50 | | |
| 5 | 40 | 30 | | 30 | |
| 6 | 55 | 15 | 10 | 20 | |
| 7 | 20 | 46 | 34 | | |
| 8 | 60 | 30 | 10 | | |
| 9 | 60 | 20 | | | 20 |

Tabelle 2

| Eigenschaften | | | | | | |
|---|---|---|---|---|---|---|
| Beispiel | DSC-Schm.-punkt °C | DSC-Glas-überg. °C | Erw.-pkt. tro °C | Erw.-pkt. Lagerung °C | $H_2O$ nach Lagerung Gew.-% | Klebrigkeit feucht |
| 1 | 126 | 33 | 133 | 73 | 28 | klebt |
| 2 | 139 | 53 | 141 | 77 | 52 | klebt |
| 3 | 138 | 36 | 142 | 81 | 55 | klebt |
| 4 | 175 | 57 | 134 | 90 | 29 | klebt |
| 5 | 121 | 26 | 110 | 49 | 27 | klebt |
| 6 | 141 | 54 | 128 | 60 | 31 | klebt |
| 7 | 157 | 39 | 160 | 124 | 32 | " nicht |
| 8 | 157 | 25 | 149 | 102 | 31 | " nicht |
| 9 | 144 | 21 | 140 | 92 | 31 | " nicht |

Tabelle 3

| Verklebung mit Pulver | | | | |
|---|---|---|---|---|
| Kleber aus Beisp. | Zustand | Verklebungstemperatur in °C | Schälhaftung in N/2cm | Wärmestandfestigkeit nach Verarbeitung °C |
| 1 | feucht | 30 | 7,6 | 148 |
| 2 | feucht | 30 | 6,9 | 154 |
| 3 | feucht | 30 | 7,3 | 152 |
| 4 | feucht | 30 | 7,5 | 140 |
| 5 | feucht | 30 | 6,4 | 135 |
| 6 | feucht | 60 | keine Haftung | |
| 7 | feucht | 60 | keine Haftung | |
| 8 | feucht | 60 | keine Haftung | |
| 9 | trocken | 30 | keine Haftung | |
| 9 | feucht | 30 | keine Haftung | |
| 9 | trocken | 150 | 1,3 | 135 |
| 9 | feucht | 150 | 5,7 | 145 |
| 9 | trocken | 165 | 6,5 | 151 |
| 9 | feucht | 165 | 6,9 | 145 |

Tabelle 4

| Verklebungen mit Folie | | | | |
|---|---|---|---|---|
| Kleber aus Beisp. | Zustand | Verklebungstemperatur in °C | Schälhaftung in N/2cm | Wärmestandfestigkeit nach Verarbeitung |
| 1 | feucht | 30 | 10,3* | 148 |
| 2 | feucht | 30 | 11,0* | 155 |
| 3 | feucht | 30 | 10.9* | 159 |
| 10 | trocken | 30 | keine Haftung | |
| 10 | feucht | 30 | keine Haftung | |
| 10 | trocken | 120 | 2,1 | 117 |
| 10 | feucht | 120 | 2,2* | 124 |
| 10 | trocken | 135 | 9,6* | 126 |
| 10 | feucht | 135 | 10,2* | 129 |
| 11 | trocken | 30 | keine Haftung | |
| 11 | feucht | 30 | keine Haftung | |
| 11 | trocken | 110 | 1,3 | 105 |
| 11 | feucht | 110 | 2,5 | 115 |
| 11 | trocken | 125 | 10.1* | 121 |
| 11 | feucht | 125 | 9,8 | 116 |

* Substratbruch der Phenolharzpressplatte

## Patentansprüche

**1.** Klebemassen auf Basis von Copolyamiden, die bei Temperaturen unter 60°C verarbeitbar sind, dadurch gekennzeichnet, daß eine wesentliche polyamidbildende Komponente aus

- einem Salz oder Gemisch mindestens eines Diamins mit 6 bis 22 C-Atomen der Formel (1)

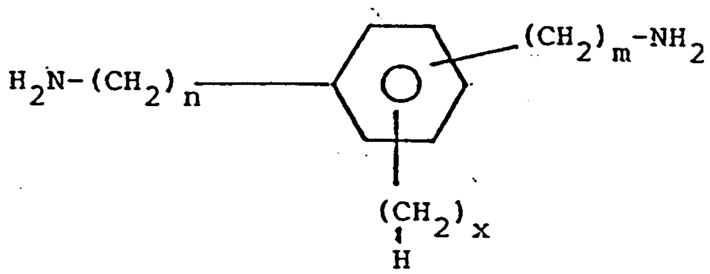

(1)

mit n = 0 bis 6, m = 0 bis 6, x = 0 bis 4 und
- mindestens einer aliphatischen Dicarbonsäure mit 6 bis 12 Kohlenstoffatomen und/oder mindestens eines aliphatischen Diamins mit 6 bis 12 Kohlenstoffatomen und mindestens einer aromatischen Dicarbonsäure mit 8 bis 10 Kohlenstoffatomen besteht und
- daß die Klebemassen einen DSC-Schmelzpunkt Von mindestens 100 °C, eine Glasübergangstemperatur, gemessen durch DSC am trockenen Pulver, von höchstens 60 °C, in trockenem Zustand eine Erweichungstemperatur von mindestens 100 °C sowie nach Befeuchten unter Gewichtszunahme eine Erweichungstemperatur unter 100 °C besitzen und nach Verarbeiten in feuchtem bzw. befeuchteten Zustand Wärmestandfestigkeiten im Verbund wie Hochleistungsschmelzkleber von mindestens 100 °C haben.

**2.** Klebemassen nach Anspruch 1, dadurch gekennzeichnet, daß die Klebemassen einen DSC-Schmelzpunkt zwischen 100 und 185 °C insbesondere zwischen 120 und 185 °C, und eine Glasübergangstemperatur zwischen 0 und 60 °C, insbesondere zwischen 25 und 60 °C, besitzen.

**3.** Klebemassen nach den Ansprüchen 1 und 2, dadurch gekennzeichnet, daß die Erweichungstemperatur, gemessen in trockenem Zustand, zwischen 110 und 160 °C, und die Erweichungstemperatur, gemessen in feuchtem Zustand, zwischen 45 und 100 °C liegt.

**4.** Klebemassen nach den Ansprüchen 1 bis 3, dadurch gekennzeichnet, daß die Klebemassen als Pulver nach einer Lagerung in Wasser mit einer Temperatur von 23 °C während einer Zeitspanne von 16 Stunden einen Wassergehalt von mehr als 20 Gew.-%, insbesondere mehr als 25 Gew.-%, zeigen.

**5.** Klebemassen nach den Ansprüchen 1 bis 4, dadurch gekennzeichnet, daß die Klebemassen nach Verarbeitung in feuchtem Zustand Wärmestandfestigkeiten im Verbund von 130 bis 180 °C, insbesondere 140 bis 160 °C, zeigen.

**6.** Klebemassen nach Anspruch 1, dadurch gekennzeichnet, daß eine wesentliche polyamidbildende Komponente ein Salz oder Gemisch mindestens eines Diamins der Formel (1) mit n = 1 oder 2, m = 1 oder 2 und x = 0 und Adipinsäure, Azelainsäure, Sebazinsäure oder Dodecandisäure und/oder Hexamethylendiamin und Terephthalsäure, Isophthalsäure oder Toluoldicarbonsäure ist, wobei insbesondere Salze oder Gemische aus m-Xylylendiamin und Adipinsäure und/oder aus Hexamethylendiamin und Isophthalsäure geeignet sind.

**7.** Klebemassen nach den Ansprüchen 1 oder 6, dadurch gekennzeichnet, daß die wesentliche polyamidbildende Komponente in einer Menge von 15 bis 55 Gew.-%, bezogen auf die Gesamtklebemasse, vorliegt.

**8.** Klebemassen nach den Ansprüchen 1 bis 7, dadurch gekennzeichent, daß die Klebemassen neben der wesentlichen polyamidbildenden Komponente des Anspruchs 1 mindestens eine weitere übliche polyamidbildende Komponente enthalten.

**9.** Klebemassen nach Anspruch 8, dadurch gekennzeichnet, daß die weitere polyamidbildende Komponente aus Gemischen aus aliphatischen Diaminen und Dicarbonsäuren mit 4 bis 12 Kohlenstoffatomen und/oder Lactamen und/oder ω-Aminocarbonsäuren mit 6 bis 12 Kohlenstoffatomen oder deren Gemischen besteht.

**10.** Klebemassen nach Anspruch 9, dadurch gekennzeichnet, daß die zusätzliche polyamidbildende Komponente aus 1 bis 50 Gew.-%, insbesondere 1 bis 40 Gew.-%, bezogen auf die Gesamtklebemasse, Hexamethylendiamin und Adipinsäure und 25 bis 75 Gew.-%, insbesondere 30 bis 60 Gew.-%, Caprolactam und/oder ω-Aminocapronsäure besteht.

**11.** Klebemassen nach den Ansprüchen 1 bis 10, dadurch gekennzeichnet, daß die Klebemassen in Form von Granulaten, Pulvern oder Folien konfektioniert sind.

**12.** Verwendung von Klebemassen nach einem der Ansprüche 1 bis 11 zur Herstellung von Verbundmaterialien oder als Klebemassen durch Verarbeiten unter der Einwirkung von Feuchtigkeit, wie Wasserdampf, vorzugsweise bei Temperaturen unterhalb 30 ° C, insbesondere Raumtemperatur.

**Claims**

**1.** Adhesive compositions based on copolyamides which are processible at temperatures below 60 ° C, characterised in that an essential polyamide-forming component consists of a salt or mixture of at least one diamine containing 6 to 22 carbon atoms corresponding to formula (1)

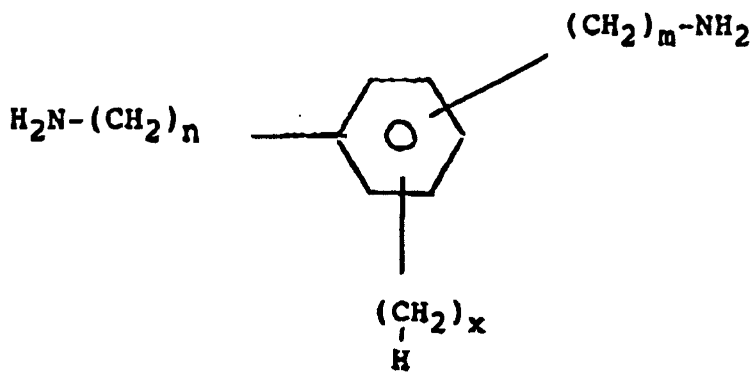

(1)

wherein n = 0 to 6, m = 0 to 6, x = 0 to 4 and
at least one aliphatic dicarboxylic acid containing 6 to 12 carbon atoms and/or at least one aliphatic diamine containing 6 to 12 carbon atoms and at least one aromatic dicarboxylic acid containing 8 to 10 carbon atoms and in that the adhesive compositions have a DSC melting point of at least 100 ° C, a glass transition temperature, measured by DSC on the dry powder, of at most 60 ° C, a softening temperature of at least 100 ° C in the dry state and a softening temperature below 100 ° C after moistening and an increase in weight, and have thermal stability in the composite as a heavy-duty hot-melt adhesive of at least 100 ° C, after processing in the moist or moistened state.

**2.** Adhesive compositions according to claim 1,
characterised in that the adhesive compositions have a DSC melting point of between 100 and 185 ° C, in particular between 120 and 185 ° C, and a glass transition temperature of between 0 and 60 ° C, in particular between 25 and 60 ° C.

**3.** Adhesive compositions according to claims 1 and 2,
characterised in that the softening temperature measured in the dry state is between 110 and 160 ° C, and the softening temperature measured in the moist state is between 45 and 100 ° C.

**4.** Adhesive compositions according to claims 1 to 3,
characterised in that the adhesive compositions as powder have a water content higher than 20% by weight, in particular higher than 25% by weight after storage in water at a temperature of 23 ° C for a period of 16 hours.

**5.** Adhesive compositions according to claims 1 to 4,
characterised in that the adhesive compositions have thermal stability in the composite of 130 to 180 ° C, in particular 140 to 160 ° C, after processing in the moist state.

6. Adhesive compositions according to claim 1, characterised in that an essential polyamide-forming component is a salt or mixture of at least one diamine corresponding to formula (1) wherein n = 1 or 2, m = 1 or 2 and x = 0 and adipic acid, azelaic acid, sebacic acid or dodecanedioic acid and/or hexamethylene diamine and terephthalic acid, isophthalic acid or toluene dicarboxylic acid, salts or mixtures of m-xylylene diamine and adipic acid and/or of hexamethylene diamine and isophthalic acid being particularly suitable.

7. Adhesive compositions according to claims 1 or 6, characterised in that the essential polyamide-forming component is present in a quantity of 15 to 55% by weight, based on the total adhesive composition.

8. Adhesive compositions according to claims 1 to 7, characterised in that the adhesive compositions contain at least one further conventional polyamide-forming component in addition to the essential polyamide-forming component from claim 1.

9. Adhesive compositions according to claim 8, characterised in that the further polyamide-forming component consists of mixtures of aliphatic diamines and dicarboxylic acids containing 4 to 12 carbon atoms and/or lactams and/or ω-aminocarboxylic acids containing 6 to 12 carbon atoms or mixtures thereof.

10. Adhesive compositions according to claim 9, characterised in that the additional polyamide-forming component consists of 1 to 50% by weight, in particular 1 to 40% by weight, based on the total adhesive composition, of hexamethylene diamine and adipic acid and 25 to 75% by weight, in particular 30 to 60% by weight, of caprolactam and/or ω-aminocaproic acid.

11. Adhesive compositions according to claims 1 to 10, characterised in that the adhesive compositions are made up in the form of granulates, powders or films.

12. Use of adhesive compositions according to one of claims 1 to 11 for the production of composite materials or as adhesive compositions by processing under the influence of moisture such as steam, preferably at temperatures below 30 °C, in particular at room temperature.

**Revendications**

1. Adhésifs à base de copolyamides, utilisables à des températures inférieures 60 °C, caractérisés par le fait qu'un constituant essentiel, formateur de polyamide est constitué
   - d'un sel ou d'un mélange d'au moins une diamine ayant de 6 à 22 atomes de carbone, de formule (I)

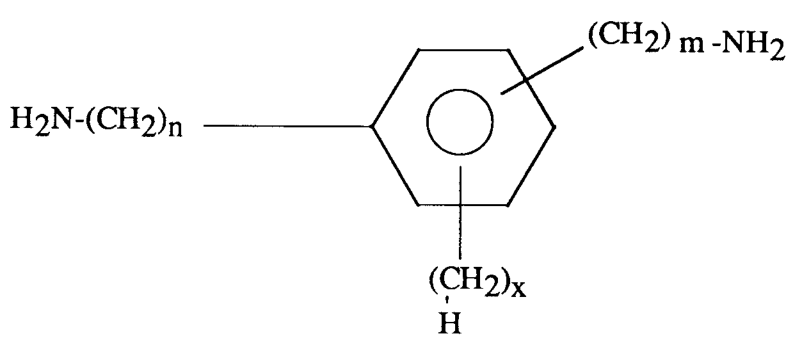

(I)

   où n = de 0 à 6, m = de 0 à 6, x = de 0 à 4, et
   - d'au moins un acide aliphatique dicarboxylique ayant de 6 à 12 atomes de carbone et/ou d'au moins une diamine aliphatique ayant de 6 à 12 atomes de carbone et d'au moins un acide aromatique dicarboxylique ayant de 8 à 10 atomes de carbone, et
   - que les adhésifs ont un point de fusion DSC d'au moins 100 °C, une température de transition

vitreuse, mesurée par DSC (calorimétrie différentielle à balayage sur de la poudre sèche, d'au moins 60 ° C, une température de ramollissement à sec d'au moins 100 ° C, et après humidification et augmentation de poids, une température de ramollissement inférieure à 100 ° C, et après utilisation à l'état humide ou humidifié sous forme composite en tant qu'adhésif fusible à grand rendement, une résistance au fluage d'au moins 100 ° C.

**2.** Adhésifs selon la revendication 1, caractérisés par le fait que les adhésifs ont une température de fusion DSC comprise entre 100 et 185 ° C et en particulier entre 120 et 180 ° C, et une température de transition vitreuse entre 0 et 60 ° C et en particulier entre 25 et 60 ° C.

**3.** Adhésifs selon les revendications 1 ou 2, caractérisés par le fait que la température de ramollissement, mesurée à l'état sec, est comprise entre 110 et 160 ° C et la température de ramollissement mesurée à l'état humide est comprise entre 45 et 100 ° C.

**4.** Adhésifs selon les revendications 1 à 3, caractérisés par le fait que les adhésifs présentent à l'état de poudre et après stockage dans l'eau à une température de 23 ° C, pendant une durée de 16 heures, une teneur en eau supérieure à 20 % en poids et en particulier supérieure à 25 % en poids.

**5.** Adhésifs selon les revendications 1 à 4, caractérisés par le fait que les adhésifs après utilisation à l'état humide présentent à l'état composite une résistance au fluage de 130 à 180 ° C et en particulier de 140 à 160 ° C.

**6.** Adhésifs selon la revendication 1, caractérisés par le fait qu'un constituant essentiel, formateur de polyamide, est un sel ou un mélange d'au moins une diamine de formule (I) où n = 1 ou 2, m = 1 ou 2 et x = 0 et de l'acide adipique, de l'acide azelaïque, de l'acide sebacique ou de l'acide dodécanedioïque et/ou de l'hexaméthylènediamine et de l'acide terephtalique, de l'acide isoterephtalique ou de l'acide toluène dicarboxylique; on préfère plus particulièrement les sels ou des mélanges à partir de m-xylylènediamine et de l'acide adipique et/ou de l'hexaméthylènediamine et de l'acide isophtalique.

**7.** Adhésifs selon les revendications 1 ou 6, caractérisés par les fait que le constituant essentiel, formateur de polyamide, est présent en une quantité de 15 à 55 %, en poids, calculé sur la masse totale d'adhésifs.

**8.** Adhésifs selon les revendications 1 à 7, caractérisés par le fait que les adhésifs contiennent en plus du constituant essentiel, formateur de polyamide, selon la revendication 1, au moins un autre constituant formateur de polyamide usuel.

**9.** Adhésifs selon la revendication 8, caractérisés par le fait que le constituant formateur de polyamide supplémentaire est constitué de mélanges de diamines et d'acides dicarboxyliques aliphatiques ayant de 4 à 12 atomes de carbone et/ou de lactames et/ou d'acides ω-aminocarboxyliques ayant de 6 à 12 atomes de carbone ou de leur mélanges.

**10.** Adhésifs selon la revendication 9, caractérisés par le fait que le constituant formateur de polyamide supplémentaire est constitué de 1 à 50 % en poids et en particulier de 1 à 40 % en poids, calculé sur la masse totale d'adhésifs, d'hexamethylènediamine et d'acide adipique et de 25 à 75 % en poids, et en particulier de 30 à 60 % en poids, de caprolactame et/ou d'acide ω-aminocaproïque.

**11.** Adhésifs selon les revendications 1 à 10, caractérisés par le fait que les adhésifs sont préparés sous forme de poudre, de granulés ou de feuilles.

**12.** Mise en oeuvre d'adhésifs selon l'une des revendications 1 à 11 pour la préparation de matières composites ou comme adhésifs, avec utilisation de l'humidité telle que la vapeur d'eau, de préférence à des températures inférieures à 30 ° C et plus particulièrement à la température ambiante.